# EUROPÄISCHE PATENTSCHRIFT

(11) **EP 1 284 424 B1**
(45) Veröffentlichungstag und Bekanntmachung des Hinweises auf die Patenterteilung: **28.02.2007**
(21) Anmeldenummer: 02015750.9
(22) Anmeldetag: 13.07.2002
(51) Int. Cl.: G01P 1/02, G01P 3/487

(54) **Sensorbefestigungsaufbau**
Sensor mounting structure
Structure de fixation de capteur

(30) Priorität: 16.08.2001 US 930936
(43) Veröffentlichungstag der Anmeldung: 19.02.2003
(73) Patentinhaber: DEERE & COMPANY, Moline, Illinois 61265-8098 (US)
(72) Erfinder: Easton, David Joseph, Cedar Falls, IA 50613-2021 (US)
(74) Vertreter: Lau-Loskill, Philipp

(56) Entgegenhaltungen:
- DE-C- 19 531 262
- GB-A- 1 455 400
- US-A- 5 764 057
- PATENT ABSTRACTS OF JAPAN vol. 007, no. 196 (P-219), 26. August 1983 (1983-08-26) -& JP 58 092955 A (NISSAN JIDOSHA KK), 2. Juni 1983 (1983-06-02)

## Beschreibung

Die Erfindung betrifft einen Sensorbefestigungsaufbau mit einem Gehäuse und einer sich durch das Gehäuse erstreckenden Sensorbohrung.

Bekannt sind viele im Handel erhältliche Sensoren, wie z. B. Geschwindigkeitssensoren, die an ein Gehäuse in der Nähe eines rotierenden Drehzahlmessrings, auf dem abwechselnd gepolte Magneten auf seinem Umfang angeordnet sind, befestigbar sind. Einer dieser bekannten Sensoren wird in einem hydrostatischen Motor eingebaut, wie dem Technischen Handbuch "TM 1784 (12OCT99) 260-15-21" für John Deere Schlepper der 9000er Serie zu entnehmen ist. Dazu wird der Sensor in eine sich in einem Motorgehäuse befindliche Gewindebohrung geschraubt, bis das Ende des Sensors den Drehzahlmessring berührt. Dies erfordert normalerweise 7 bis 10 Sensorumdrehungen. Anschließend wird der Sensor wieder in einer Teilumdrehung aus der Bohrung herausgedreht, bis sich ein gewünschter Abstand zwischen Sensorkopf und Drehzahlmessring eingestellt hat. Ein derartiger Sensor muss genau ausgerichtet werden, um zuverlässig zu arbeiten. Dies erfolgt, indem der Sensor mit einem ersten Schraubschlüssel in der richtigen Position gehalten und mit einem zweiten Schraubschlüssel eine Feststellmutter angezogen wird, um den Sensor in der gewünschten Position zu fixieren. Diese Tätigkeit ist schwer durchzuführen, wenn der Sensor oder eine Sensorvorrichtung gewartet werden muss und sie ist besonders schwierig durchzuführen, wenn der Motor sich in einem Fahrzeug, wie z. B. einem Schlepper, befindet. Wenn beispielsweise, kein Zugang für zwei Schraubschlüssel vorhanden ist, ist es schwierig den Sensor in die richtige Stellung zu drehen, so dass die Polarität des Ausgangssignals unbekannt bleibt, bis sich der Drehzahlmessring dreht.

Die Schrift US 5764057 offenbart einen Sensorbefestigungsaufbau, bei dem der Sensor mittels einer Halterung in einem Motorgehäuse montiert wird. Die Halterung weist mehrere Lippensegmente auf, die es erlauben, den Sensor an einer definierten Position anzubringen. Dazu wird der Sensor durch Laserschweißen oder Kleben in der Halterung fixiert.

Die der Erfindung zugrunde liegende Aufgabe wird darin gesehen, einen Sensorbefestigungsaufbau der eingangs genannten Art anzugeben, durch welchen die vorgenannten Probleme überwunden werden. Insbesondere soll ein Sensorbefestigungsaufbau vorgesehen werden, der einfach zu montieren ist und der es ermöglicht, den Sensor sowohl in axialer Richtung als auch in Verdrehrichtung zuverlässig zu positionieren.

Die Aufgabe wird erfindungsgemäß durch die Lehre des Patentanspruchs 1 gelöst. Weitere vorteilhafte Ausgestaltungen und Weiterbildungen der Erfindung gehen aus den abhängigen Ansprüchen hervor.

Erfindungsgemäß wird bei dem Gehäuse des eingangs genannten Sensorbefestigungsaufbaus in die Oberfläche der Sensorbohrung eine ringförmige Nut eingebracht. Des Weiteren ist eine in die Sensorbohrung montierbare Halterung enthalten. Die Halterung weist einen wenigstens teilweise zylindrischen Halterungskörper auf, an dessen einem Ende wenigstens ein Lippensegment ausgebildet ist, das von diesem radial nach außen gerichtet ist. Das Lippensegment wird von der ringförmigen Nut aufgenommen, wenn die Halterung axial in die Sensorbohrung geführt wird. Die Halterung enthält mehrere Laschen, die sich von dem Lippensegment aus axial zu einem freien Ende erstrecken, wobei jede Lasche mehrere Rückhaltezähne enthält, die im Bereich des freien Endes radial nach innen gerichtet sind.

Ein zu befestigender Sensor mit einem zylindrischen Sensorkörper enthält einen Bereich, der mit mehreren Sensorzähnen versehen ist. Der Sensorkörper ist in die Halterung einsetzbar, wenn die Halterung in die Sensorbohrung montiert ist und der Sensorkörper mit dem besagten einen Ende des Halterungskörpers in Eingriff steht um das Lippensegment in der Nut zu halten. Dabei greifen die Sensorzähne und die Rückhaltezähne ineinander ein, so dass der Sensor lösbar in einer befestigten Position innerhalb der Halterung und der Sensorbohrung gehalten wird. Die ineinandergreifenden Zähne am Sensor und an den Halterungslaschen ermöglichen eine axial variable Fixierung des Sensors in der Halterung, derart, dass sich die Zähne je nach axialer Positionierung des Sensors unterschiedlich stark überdecken. Durch einfaches Öffnen der Laschen kann die Verzahnung gelöst und der Sensor aus der Halterung entnommen werden.

Gemäß einer besonders bevorzugten Ausgestaltung der Erfindung enthält das Gehäuse eine Passbohrung, die parallel zu der Sensorbohrung ausgerichtet und zu dieser beabstandet angeordnet ist. Die Halterung enthält einen Passstift, der von der Passbohrung aufgenommen wird. Dabei verbindet ein von dem Halterungskörper abstehender Arm den Passstift und die Halterung miteinander. Dadurch, dass die Halterung durch den Arm mit dem Passstift fest verbunden ist, ist auch die Verdrehlage der Halterung vorgegeben.

In einer weiteren bevorzugten Ausgestaltung der Erfindung bildet das Lippensegment eine axial ausgerichtete Absatzfläche aus, die mit einer axial ausgerichteten ringförmigen Seitenwand der Nut im Eingriff steht. Die axial ausgerichtete Absatzfläche des Lippensegmentes bewirkt eine sichere axiale Fixierung der Halterung in der Bohrung, da die vorzugsweise plane Absatzfläche des Lippensegments sich an der Seitenwand der ringförmigen Nut abstützt und ein Herauslösen der Halterung aus der Sensorbohrung verhindert. Des Weiteren ist das Lippensegment mit einer bogenförmig abgerundeten, außen umlaufenden Oberfläche versehen, die sich ausgehend vom äußeren Rand der Absatzfläche nach innen erstreckt. Die abgerundete Ausbildung des Lippensegmentes vereinfacht dabei das Einführen oder Einsetzen der Halterung in die Bohrung.

In einer weiteren bevorzugten Ausgestaltung der Erfindung enthält der Sensorkörper an einer äußeren Oberfläche mehrere sich axial erstreckende Erhebungen, die durch Zwischenräume getrennt sind. Korrespondierende Zwischenräume zwischen den Laschen der Halterung nehmen die Erhebungen des Sensorkörpers auf und legen die Verdrehlage des Sensors gegenüber der Halterung fest. Durch den Passstift, dem Arm an der Halterung und der Aufnahme der Erhebungen durch die Zwischenräume der Laschen ist eine eindeutige Montage hinsichtlich der Verdrehlage des Sensors gegenüber des Gehäuses gegeben.

In einer weiteren bevorzugten Ausgestaltung der Erfindung sind die Sensorzähne auf einer Oberfläche des Sensorkörpers in den Zwischenräumen zwischen den Erhebungen ausgebildet. Da die nach innen verzahnten Laschenenden bei der Aufnahme des Sensors zwischen die Erhebungen geführt werden, ist es zweckmäßig die nach außen gerichteten Zähne am Sensorkörper zwischen den Erhebungen auszubilden.

In einer weiteren bevorzugten Ausgestaltung der Erfindung ist der Halterungskörper C-förmig ausgebildet und enthält ausgehend von einem mittleren Teil eine sich axial erstreckende Passlasche. Des Weiteren sind eine erste Anzahl von Laschen, die sich auf einer Seite des mittleren Teils in axiale Richtung vom Halterungskörper hinweg erstrecken und eine zweite Anzahl von Laschen, die sich auf einer anderen Seite des mittleren Teils in axialer Richtung vom Halterungskörper hinweg erstrecken enthalten. Entsprechend der Aufteilung der Laschen am Halterungskörper ist ein erstes Lippensegment auf dem Halterungskörper in der Nähe von der ersten Anzahl von Laschen und ein zweites Lippensegment auf dem Halterungskörper in der Nähe von der zweiten Anzahl von Laschen ausgebildet. In dieser Ausführungsform ragt der den Passstift führende Arm von der Passlasche aus vorzugsweise radial nach außen, wobei der Passstift vom Ende des Arms sich in axiale Richtung erstreckt. Wie auch bei den anderen Ausführungsformen der Erfindung wird die Verdrehlage der Halterung im Gehäuse über den Passstift und über den Arm an der Passlasche und die des Sensors in der Halterung über die Laschen und die Erhebungen am Sensorkörper festgelegt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen erfindungsgemäßen Sensorbefestigungsaufbau in einer auseinandergezogenen perspektivischen Darstellung,
- Fig. 2: eine perspektivische Teilschnittansicht des erfindungsgemäßen Sensorbefestigungsaufbaus und
- Fig. 3: eine Teilschnittansicht eines an einem Gehäuse montierten Sensors und einer Haltebuchse gemäß vorliegender Erfindung.

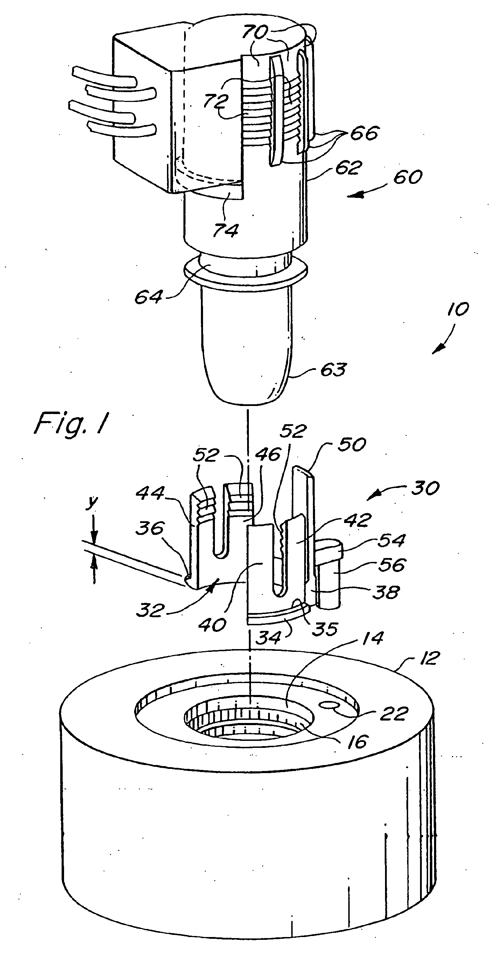

Die Figuren 1 bis 3 zeigen einen Sensorbefestigungsaufbau 10, der ein Gehäuse 12 enthält, welches in der Nähe eines abzutastenden Gegenstands, wie z. B. eines rotierenden Rads, eines Zahnradrings oder eines Drehzahlmessrings 13, montiert ist. Durch das Gehäuse 12 erstreckt sich eine Sensorbohrung 14 deren Oberfläche mit einer ringförmigen Nut 16 versehen ist. Vorzugsweise enthält die Nut 16 axial gegenüberliegende und sich radial erstreckende Seitenwände 18, 20, die in einem Abstand X zueinander stehen. Eine Sacklochpassbohrung 22 erstreckt sich parallel zur Sensorbohrung 14 und ist beabstandet zu dieser angeordnet.

In die Sensorbohrung 14 ist eine Halterung 30 montierbar. Die Halterung weist einen C-förmig ausgebildeten Körper 32 auf, wobei ein Ende des Körpers 32 Lippensegmente 34, 36 enthält, die von diesem radial nach außen vorstehen und beidseitig zu einem mittleren Teil 38 des Körpers 32 beabstandet angeordnet sind. Die Lippen 34, 36 besitzen eine axiale Ausdehnung Y und enthalten axial ausgerichtete Absatzflächen 35, 37. Des Weiteren enthält die Halterung 30 ein erstes Paar Laschen 40, 42, die an das Lippensegment 34 angrenzen und sich vom Lippensegment 34 aus in axiale Richtung erstrecken. Des Weiteren enthält die Halterung 30 ein zweites Paar Laschen 44, 46, die an das Lippensegment 36 angrenzen und sich vom Lippensegment 36 aus in axiale Richtung erstrecken.

Zwischen den Laschen 42, 46 ist eine Passlasche 50 angeordnet, die sich vom mittleren Teil 38 aus in axiale Richtung erstreckt. An jeder Lasche 40, 42, 44, 46 sind an einem äußeren Ende eine ' Reihe von radial nach innen gerichteten Rückhaltezähnen 52 ausgebildet. Die Halterung enthält auch einen Arm 54, der sich vom mittleren Teil 38 des Körpers 32 aus radial nach außen erstreckt. Von einem Ende des Armes 54 aus erstreckt sich axial ein Passstift 56. In einem entspannten Zustand weisen die äußeren Oberflächen der Lippen 34, 36 vorzugsweise einen Abstand zueinander auf, der größer als der Durchmesser der Sensorbohrung 14 ist.

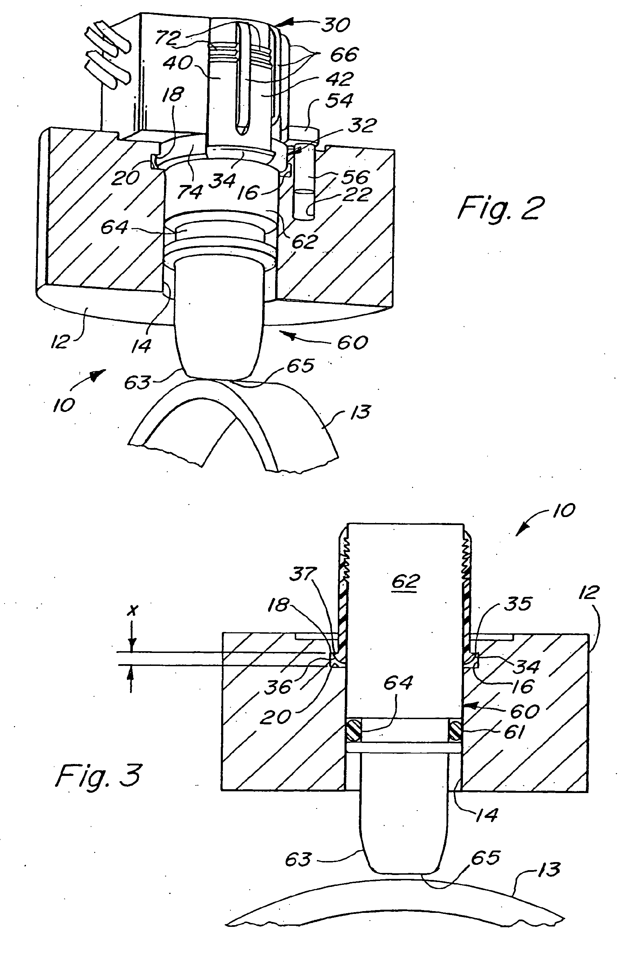

Ein Sensor 60, wie z. B. ein handelsüblicher Drehzahlmagnetsensor, enthält einen zylindrischen Sensorkörper 62 in dem eine einen O-Ring 61 aufnehmende O-Ring-Nut 64 ausgebildet ist. Ein Sensorprüfkopf 63 ragt aus dem Körper 62 und erstreckt sich zu einem Ende 65 nahe des Drehzahlmessringes 13. Der Sensorkörper 62 enthält mehrere sich axial erstreckende Erhöhungen 66, die an einer äußeren Oberfläche davon ausgebildet und durch Zwischenräume 70 voneinander getrennt sind. In den Zwischenräumen 70 zwischen den Erhebungen 66 sind auf der Oberfläche des Sensorkörpers 62 mehrere Reihen von Sensorzähnen 72 ausgebildet, wobei nur zwei der vier Reihen von Sensorzähnen in den Figuren 1 und 2 zu sehen sind. Vorzugsweise ist eine Reihe Sensorzähne 72 korrespondierend zu jeder Reihe Rückhaltezähne 52 ausgebildet. Wie am besten in Figur 1 und 2 zu sehen, enthält der Sensorkörper 62 ein bogenförmig ausgebildetes Ringsegment 74, welches radial vom Spulenkörper 62 vorsteht und so bemessen ist, dass es zwischen die Lippensegmente 34, 36 der Halterung 30 passt und im Wesentlichen den Zwischenraum ausfüllt.

Beim Einsetzen des Sensors 60 in das Gehäuse 12, wird zuerst die Halterung 30 in die Sensorbohrung 14 eingesetzt, wobei der Passstift 56 zur Sacklochpassbohrung 22 ausgerichtet ist und die Lippensegmente 34, 36 der Sensorbohrung zugewandt sind. Dies kann erfolgen, indem die mit den Lippensegmenten 34, 36 versehenen Enden der Laschen 40, 42, 44, 46 zusammengedrückt werden, so dass die Halterung 30 in die Sensorbohrung 14 eingeführt werden kann. Vorzugsweise werden die Lippensegmente 34, 36 im Inneren der Sensorbohrung 14 radial an die Wand gepresst und schnappen dann radial nach außen in die ringförmige Nut 16, während der Passstift 56 von der Sacklochpassbohrung 22 aufgenommen wird.

In einem nächsten Schritt wird der Sensor 60 in die montierte Halterung 30 eingesetzt, so dass das Ringsegment 74 zwischen den Lippensegmenten 34, 36 positioniert wird. Der Sensorkörper 62 hält die Lippensegmente 34, 36 in der ringförmigen Nut 16 und verhindert ein Herauslösen der Halterung 30 aus dem Gehäuse 12. Die Laschen 40, 42, 44, 46 werden in den Zwischenräumen 70 zwischen den Erhebungen 66 aufgenommen, sobald der Sensor 60 in die Halterung 30 gleitet bis das Ende 65 des Sensorprüfkopfes 63 den Drehzahlmessring 13 berührt. An diesem Punkt greifen die Rückhaltezähne 52 der Laschen 40, 42, 44, 46 und die Sensorzähne 72 ineinander und halten den Sensor 60 in seiner montierten Position. Mittels innerhalb des Aufbaus herrschenden Luftdruck oder hydraulischem Druck innerhalb des Aufbaus oder durch eine nicht gezeigte Montagefeder werden die montierte Halterung 30 mit dem Sensor 60 vom Drehzahlmessring weg bewegt, so dass die axial ausgerichteten Absatzflächen 35, 37 der Lippensegmente 34, 36 mit der ringförmigen Seitenwand 18 der Nut 16 in Eingriff treten. Das resultierende Spiel zwischen dem Ende 65 des Sensorprüfkopfes 63 und dem Drehzahlmessring 13 liegt vorzugsweise zwischen einen Minimalwert von (X-Y) und einem Maximalwert von (X-Y plus dem Zahnabstand der Zähne 52 und 72).

Um den Sensor 60 wieder zu entfernen, werden die Rückhaltezähne 52 von den Sensorzähnen 72 gelöst, so dass der Sensor 60 aus der Halterung 30 herausgezogen werden kann.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise dieses Konzept bei anderen Sensoren angewendet werden, wie z. B. bei Motordrehzahlsensoren, Zeitmesssensoren, Rückwärtsgangsensoren oder bei jedem anderen Sensor, der in einem Gehäuse installiert ist und in einem gewissen Abstand zu einer anderen Vorrichtung angeordnet ist.

## Patentansprüche

1. Sensorbefestigungsaufbau mit einem Gehäuse (12) und einer, sich durch das Gehäuse (12) erstreckenden, Sensorbohrung (14), **gekennzeichnet durch**
- eine im Gehäuse (12) in die Oberfläche der Sensorbohrung (14) eingebrachte ringförmige Nut (16),
- eine in die Sensorbohrung (14) montierbare Halterung (30), wobei die Halterung (30) einen wenigstens teilweise zylindrischen Halterungskörper (32) aufweist und an einem Ende des Halterungskörpers (32) wenigstens ein Lippensegment (34, 36) ausgebildet ist, das von diesem radial nach außen gerichtet ist und das von der ringförmigen Nut (16) aufgenommen wird, wenn die Halterung (30) axial in die Sensorbohrung (14) eingeführt wird, und wobei die Halterung (30) mehrere Laschen (40, 42, 44, 46) enthält, die sich von dem Lippensegment (34, 36) aus axial zu einem freien Ende erstrecken und jeweils mehrere Rückhaltezähne (52) enthalten, die im Bereich des freien Endes radial nach innen gerichtet sind,
- einen Sensor (60) mit einem zylindrischen Sensorkörper (62), welcher einen mit mehreren Sensorzähnen (72) versehenen Bereich enthält und in die Halterung (30) einsetzbar ist, nachdem die Halterung (30) in die Sensorbohrung (14) montiert ist, wobei der Sensorkörper (62) mit dem besagten einen Ende des Halterungskörpers (32) in Eingriff tritt, um das Lippensegment (34, 36) in der Nut (16) zu halten, und wobei die Sensorzähne (72) und die Rückhaltezähne (52) derart ineinander greifen, dass der Sensor (60) lösbar in einer befestigten Position innerhalb der Halterung (30) und der Sensorbohrung (14) gehalten wird.

2. Sensorbefestigungsaufbau nach Anspruch 1, **dadurch gekennzeichnet, dass** das Gehäuse (12) eine zu der Sensorbohrung (14) ausgerichtete und zu dieser beabstandete Passbohrung (22) enthält und dass die Halterung (30) einen Passstift (56) enthält, der von der Passbohrung (22) aufgenommen wird.

3. Sensorbefestigungsaufbau nach Anspruch 2, **dadurch gekennzeichnet, dass** die Halterung (30) einen Arm (54) enthält, der den Passstift (56) mit dem Halterungskörper (32) verbindet.

4. Sensorbefestigungsaufbau nach einem der vorhergehenden Ansprüche, **dadurch gekennzeichnet, dass** das Lippensegment (34, 36) eine axial ausgerichtete Absatzfläche (35, 37) ausbildet, die mit einer axial ausgerichteten ringförmigen Seitenwand (18) der Nut (16) im Eingriff steht.

5. Sensorbefestigungsaufbau nach Anspruch 4, **dadurch gekennzeichnet, dass** das Lippensegment (34, 36) eine bogenförmig abgerundete, außen umlaufende Oberfläche enthält, die sich ausgehend vom äußeren Rand der Absatzfläche (35, 37) erstreckt.

6. Sensorbefestigungsaufbau nach einem der vorhergehenden Ansprüche, **dadurch gekennzeichnet, dass** der Sensorkörper (62) an einer äußeren Oberfläche mehrere sich axial erstreckende durch Zwischenräume (70) getrennte Erhebungen (66) enthält, wobei die Laschen (40, 42, 44, 46) von den Zwischenräumen (70) aufgenommen werden.

7. Sensorbefestigungsaufbau nach Anspruch 6, **dadurch gekennzeichnet, dass** die Sensorzähne (72) auf einer Oberfläche des Sensorkörpers (62) in den Zwischenräumen (70) zwischen den Erhebungen (66) ausgebildet sind.

8. Sensorbefestigungsaufbau nach einem der vorhergehenden Ansprüche, **dadurch gekennzeichnet, dass** die Halterung (30) einen C-förmig ausgebildeten Halterungskörper (32), eine sich axial von einem mittleren Teil (38) des Halterungskörpers (32) erstreckende Passlasche (50), eine erste Anzahl von Laschen (40, 42), die sich auf einer Seite des mittleren Teils (38) in axiale Richtung vom Halterungskörper (32) hinweg erstrecken und eine zweite Anzahl von Laschen (44, 46), die sich auf einer anderen Seite des mittleren Teils (38) in axialer Richtung vom Halterungskörper (32) hinweg erstrecken, enthält.

9. Sensorbefestigungsaufbau nach Anspruch 8, **dadurch gekennzeichnet, dass** ein erstes Lippensegment (34) auf dem Halterungskörper (32) benachbart zu der ersten Anzahl von Laschen (40, 42) und ein zweites Lippensegment (36) auf dem Halterungskörper (32) benachbart zu der zweiten Anzahl von Laschen (44, 46) ausgebildet ist.

10. Sensorbefestigungsaufbau nach Anspruch 8 oder 9, **dadurch gekennzeichnet, dass** ein Arm (54) von der Passlasche (50) aus radial nach außen ragt und dass ein Passstift (56) vom Ende des Arms (54) axial absteht.

## Claims

1. Sensor mounting assembly with a housing (12) and a sensor bore (14) extending through the housing (12), **characterised by**
• an annular groove (16) formed in the housing (12) in the surface of the sensor bore (14),
• a retainer (3) for mounting in the sensor bore (14), wherein the retainer (30) has an at least partially cylindrical retainer body (32) and at one end of the retainer body (32) at least one lip segment (34, 36) is configured, which is directed radially outwards from this and is received by the annular groove (16) when the retainer (30) is inserted axially into the sensor bore (14), and wherein the retainer (30) comprises a plurality of fingers (40, 42, 44, 46), which extend axially from the lip segment (34, 36) to a free end and respectively comprise several retainer teeth (52), which are directed radially inwards in the region of the free end,
• a sensor (60) with a cylindrical sensor body (62), which comprises a region provided with a plurality of sensor teeth (72) and can be inserted into the retainer (30) once the retainer (30) is mounted into the sensor bore (14), wherein the sensor body (62) engages with said one end of the retainer body (32) in order to hold the lip segment (34, 36) in the groove (16), and wherein the sensor teeth (72) and the retainer teeth (52) intermesh in such a manner that the sensor (60) is detachably held in a fastened position inside the retainer (30) and the sensor bore (14).

2. Sensor mounting assembly according to Claim 1, **characterised in that** the housing (12) comprises an alignment bore (22) oriented to the sensor bore (14) and spaced from this, and that the retainer (30) comprises an alignment pin (56), which is received by the alignment bore (22).

3. Sensor mounting assembly according to Claim 2, **characterised in that** the retainer (30) comprises an arm (54), which connects the alignment pin (56) to the retainer body (32).

4. Sensor mounting assembly according to one of the preceding claims, **characterised in that** the lip segment (34, 36) forms an axially aligned shoulder surface (35, 37), which engages with an axially aligned annular side wall (18) of the groove (16).

5. Sensor mounting assembly according to Claim 4, **characterised in that** the lip segment (34, 36) comprises an outer peripheral surface rounded in an arc shape, which extends from the outer edge of the shoulder surface (35, 37).

6. Sensor mounting assembly according to one of the preceding claims, **characterised in that** on an outer surface the sensor body (62) comprises a plurality of axially extending ridges (66) separated by spaces (70), wherein the fingers (40, 42, 44, 46) are received by the spaces (70).

7. Sensor mounting assembly according to Claim 6, **characterised in that** the sensor teeth (72) are configured on a surface of the sensor body (62) in the spaces (70) between the ridges (66).

8. Sensor mounting assembly according to one of the preceding claims, **characterised in that** the retainer (30) comprises a C-shaped retainer body (32), an alignment tab (50) extending axially from a central portion (38) of the retainer body (32), a first set of fingers (40, 42), which extend in axial direction away from the retainer body (32) on one side of the central portion (38), and a second set of fingers (44, 46), which extend in axial direction away from the retainer body (32) on another side of the central portion (38).

9. Sensor mounting assembly according to Claim 8, **characterised in that** a first lip segment (34) is configured on the retainer body (32) adjacent to the first set of fingers (40, 42) and a second lip segment (36) is configured on the retainer body (32) adjacent to the second set of fingers (44, 46).

10. Sensor mounting assembly according to Claim 8 or 9, **characterised in that** an arm (54) projects radially outwards from the alignment tab (50) and that an alignment pin (56) projects axially from the end of the arm (54).

## Revendications

1. Structure de fixation de capteur comportant un boîtier (12) et un alésage pour capteur (14), passant à travers le boîtier (12), **caractérisée par**
- une rainure annulaire (16) ménagée dans le boîtier (12), dans la surface de l'alésage pour capteur (14),
- un support (30) destiné à être monté dans l'alésage pour capteur (14), ledit support (30) comportant un corps (32) au moins en partie cylindrique et au moins un segment à lèvre (34, 36) étant réalisé sur une extrémité du corps de support (32), lequel segment est orienté dans le sens radial vers l'extérieur à partir de ce dernier et lequel est reçu dans la rainure annulaire (16), lorsque le support (30) est introduit dans le sens axial dans l'alésage pour capteur (14), et le support (30) comportant plusieurs languettes (40, 42, 44, 46) qui s'étendent à partir du segment à lèvre (34, 36) dans le sens axial vers une extrémité libre et qui comportent chacune plusieurs dents de retenue (52) qui, dans la zone de l'extrémité libre, sont orientées dans le sens radial vers l'intérieur,
- un capteur (60) avec un corps (62) cylindrique, qui comporte une zone munie de plusieurs dents (72) et qui est destiné à être inséré dans le support (30), une fois que le support (30) a été monté dans l'alésage pour capteur (14), le corps de capteur (62) étant en prise avec ladite extrémité du corps de support (32) afin de maintenir le segment à lèvre (34, 36) dans la rainure (16), et les dents (72) du capteur étant en prise avec les dents de retenue (52) de telle sorte que le capteur (60) est maintenu de manière amovible dans une position fixée à l'intérieur du support (30) et de l'alésage pour capteur (14).

2. Structure de fixation de capteur selon la revendication 1, **caractérisée en ce que** le boîtier (12) comporte une forure d'ajustage (22) alignée avec l'alésage pour capteur (14) et située à distance de celui-ci et **en ce que** le support (30) comporte un téton d'ajustage (56) qui est reçu dans la forure d'ajustage (22).

3. Structure de fixation de capteur selon la revendication 2, **caractérisée en ce que** le support (30) comporte un bras (54), par lequel le téton d'ajustage (56) est relié au corps de support (32).

4. Structure de fixation de capteur selon l'une quelconque des revendications précédentes, **caractérisée en ce que** le segment à lèvre (34, 36) forme une surface en saillie (35, 37), qui est orientée dans le sens axial et qui entre en prise avec une paroi latérale (18) annulaire, orientée axialement, de la rainure (16).

5. Structure de fixation de capteur selon la revendication 4, **caractérisée en ce que** le segment à lèvre (34, 36) comporte une surface périphérique extérieure arrondie en forme d'arc, qui s'étend à partir du bord extérieur de la surface en saillie (35, 37).

6. Structure de fixation de capteur selon l'une quelconque des revendications précédentes, **caractérisée en ce que** le corps de capteur (62) comporte, sur une surface extérieure, plusieurs surélévations (66) séparées par des intervalles (70), les languettes (40, 42, 44, 46) étant reçues dans les intervalles (70).

7. Structure de fixation de capteur selon la revendication 6, **caractérisée en ce que** les dents (72) du capteur sont réalisées sur une surface du corps de capteur (62) dans les intervalles (70) entre les surélévations (66).

8. Structure de fixation de capteur selon l'une quelconque des revendications précédentes, **caractérisée en ce que** le support (30) comporte un corps de support (32) réalisé en forme de C, une patte d'ajustage (50) orientée dans le sens axial à partir d'une partie centrale (38) du corps de support (32), une première série de languettes (40, 42), qui s'étendent sur un côté de la partie centrale (38) en s'écartant du corps de support (32) dans la direction axiale, et une deuxième série de languettes (44, 46), qui s'étendent sur un autre côté de la partie centrale (38) en s'écartant du corps de support (32) dans la direction axiale.

9. Structure de fixation de capteur selon la revendication 8, **caractérisée en ce qu'**un premier segment à lèvre (34) est réalisé sur le corps de support (32) au voisinage de la première série de languettes (40, 42) et un deuxième segment à lèvre (36) est réalisé sur le corps de support (32) au voisinage de la deuxième série de languettes (44, 46).

10. Structure de fixation de capteur selon la revendication 8 ou 9, **caractérisée en ce qu'**un bras (54) s'avance radialement vers l'extérieur depuis la patte d'ajustage (50) et **en ce qu'**un téton d'ajustage (56) est en saillie axiale sur l'extrémité du bras (54).
